# EUROPÄISCHE PATENTANMELDUNG

(11) **EP 2 146 074 A2**
(43) Veröffentlichungstag der Anmeldung: **20.01.2010**
(21) Anmeldenummer: 09013708.4
(22) Anmeldetag: 02.12.2004
(51) Int. Cl.: F02B 67/04, F02B 77/14, F16F 15/26

(54) **Kolbenmaschine mit integrierten Ausgleichswellen**

(30) Priorität: 02.12.2003 AT 8542003
(62) Teilanmeldung aus: 04819562.2
(71) Anmelder: MAGNA Drivetrain AG & Co KG, 8502 Lannach (AT)
(72) Erfinder: Messing, Michael, 4522 Sierning (AT); Marzy, Roland, 4400 Steyr (AT); Penzinger, Roland, 4400 Steyr (AT)
(74) Vertreter: Manitz, Finsterwald & Partner GbR

(57) **Zusammenfassung**

Eine Kolbenmaschine mit Ausgleichswelleneinheit besitzt an ihrem Kurbelgehäuse (2) ein von einem Flansch (16,17) umgebenes Fenster (36), wobei der Flansch eine Trennfläche bildet, an der das Gehäuse (20; 20,21) der Ausgleichswelleneinheit (18;18,19) mittels Schrauben (70) befestigt ist. Um für ins Gehäuse integrierte Ausgleichswellen bei einfachster Montage einen sauberen Zahnradeingriff zu sichern, besitzt die Ausgleichswelle (22,23) ein durch das Fenster (36) ins Innere des Kurbelgehäuses (2) ragendes Zahnrad (24,25), welches von einem auf der Kurbelwelle (6) sitzenden Zahnrad (10) angetrieben ist, und das Gehäuse (20,21) der Ausgleichswelleneinheit (18,19) besitzt eine Trennfläche (40,41), die zur Einstellung des Verzahnungsspieles auf der Trennfläche (40,41) des Kurbelgehäuses (2) verschiebbar ist, bevor die Schrauben (70) festgezogen werden.

## Beschreibung

Die Erfindung betrifft eine Kolbenmaschine mit mindestens einer Ausgleichswelleneinheit, in deren Kurbelgehäuse eine Kurbelwelle gelagert ist, und an deren Kurbelgehäuse seitlich ein von einem Flansch umgebenes Fenster vorgesehen ist, wobei der Flansch eine Trennfläche bildet, an der das Gehäuse der Ausgleichswelleneinheit Schrauben befestigt ist, in welchem eine Ausgleichswelle gelagert ist. Bei der Kolbenmaschine ist vor allem an eine Verbrennungskraftmaschine gedacht.

Bei den zur Zeit gebräuchlichen Verbrennungskraftmaschinen mit paarweisen Ausgleichswellen ist eine beide Ausgleichswellen enthaltende Einheit von unten an die Kurbelwellenlager angeschlossen. Das hat den Vorteil, konventionelle Grundmotoren ohne größere konstruktive Eingriffe mit Ausgleichswellen ausstatten zu können, vergrößert jedoch die Bauhöhe des Motors. Das ist bei schräg abfallender Motorhaube unerwünscht. Bei der vollständigen Neukonstruktion einer Verbrennungskraftmaschine trachtet man daher danach, die Ausgleichswellen in den Motor zu integrieren, sie seitlich in beziehungsweise an das Kurbelgehäuse oder den Motorblock (welche sowieso meist einstückig sind) zu integrieren.

Was dabei Schwierigkeiten bereitet, ist der Einbau und der Antrieb der Ausgleichswelleneinheit. Aus der DE-A- 29 35 384 ist es bekannt, eine Ausgleichswelle seitlich in einem Deckel zu lagern und sie mittels einer Kette anzutreiben. Dank eines Kettenspanners ist ein spielfreier Antrieb möglich, jedoch erschwert die Kette den Einbau erheblich.

Wird eine Ausgleichswelle mittels Zahnrädern angetrieben, so erfordert der für Ausgleichswellen typische Belastungsfall (kleines aber pulsierendes übertragenes Drehmoment bei sehr hoher Drehzahl) besondere Maßnahmen zur Vermeidung von störenden Geräuschen. Eine bewährte Maßnahme ist die Verringerung des Zahnspieles, insbesondere des Verdrehflankenspieles, was eine sehr genaue Einstellung der Wellenlage erfordert. Für unter der Kurbelwelle paarweise angeordnete Ausgleichswellen mit Zahnradantrieb ist es aus der EP-B- 916 833 bekannt, die gesamte Ausgleichswelleneinheit mittels verdrehbarer Exzenter einzustellen.

Der Erfindung liegt die Aufgabe zugrunde, auch für ins Gehäuse integrierte Ausgleichswellen bei einfachster Montage einen Weg zur genauen Einstellung des Zahnradeingriffes anzugeben. Erfindungsgemäß besteht dieser in den kennzeichnenden Merkmalen a) und b) des 1. Anspruches. Der Antrieb mittels Zahnrädern erlaubt es, die Einheit mit wenigen Handgriffen von aussen anzubauen, soferne eine Einstellung des Zahnspieles von aussen gelingt. Das gelingt dank der aufeinander verschiebbaren ebenen Trennflächen. Das Fenster ins Innere des Kurbelgehäuses braucht nur etwas größer zu sein als das Zahnrad, wodurch die strukturelle Schwächung des Kurbelgehäuses minimiert werden kann.

Wenn zum Ausgleich der Massenkräfte zweiter Ordnung an jeder Seite des Kurbelgehäuses eine Ausgleichswelleneinheit vorgesehen ist und die Wellen sich in entgegengesetztem Sinn mit doppelter Kurbelwellendrehzahl drehen sollen, so ist im Gehäuse der zweiten Ausgleichswelleneinheit zusätzlich noch eine Zwischenwelle mit einem Zwischenzahnrad gelagert, welches einerseits mit dem Zahnrad der Ausgleichswelle und andererseits mit einem auf der Kurbelwelle sitzenden Zahnrad kämmt (Anspruch 2). So kämmt auf der einen Seite das Zahnrad der Ausgleichswelle und auf der anderen das der Zwischenwelle, und beide mit demselben Zahnrad auf der Kurbelwelle.

In einer bevorzugten Anordnung schließt in einem normal zur Kurbelwellenachse gedachten Schnitt die Trennfläche mit der Verbindungsgeraden der Achsen von Kurbelwelle und Ausgleichswelle einen stumpfen Winkel ein (Anspruch 3). Der Winkel darf kein rechter Winkel sein, weil eine Verschiebung der Ausgleichswelleneinheit dann keine Veränderung des Zahnspieles bewirken würde. Der stumpfe Winkel aber ergibt eine "Übersetzung", wodurch das Zahnspiel mit einer großen Verschiebung der Ausgleichswelleneinheit sehr genau einstellbar ist und auch beim Anziehen der Schrauben nach der Einstellung nicht mehr verfälscht wird. Weiters sind die Trennflächen vorzugsweise parallel zur Symmetrieebene des Kurbelgehäuses (Anspruch 4), das vereinfacht ausserdem die Bearbeitung.

In Weiterbildung der Erfindung ist in den Trennflächen des Kurbelgehäuses und des Gehäuses der Ausgleichswelleneinheit mindestens eine Schiebeführung vorgesehen, die eine Verschiebung in einer zur Kurbelwelle normalen Ebene erlaubt (Anspruch 5). Das erleichtert das Einstellen und bietet die Gewähr, dass die Achsen der beiden miteinander kämmenden Zahnräder parallel bleiben. So ist zusätzlich zum genau eingestellten Verdrehflankenspiel auch noch sauberer Eingriff über die ganze Zahnbreite sichergestellt.

Vorzugsweise besteht die Schiebeführung aus einer geraden Nut in Schieberichtung in einer der beiden Trennflächen und aus einer in die andere Trennfläche eingelassenen Passfeder (Anspruch 6). Das verbindet hohe Präzision mit einfacher Fertigung.

In einer bevorzugten Ausführungsform läuft die Ausgleichswelle in ihrem Gehäuse in geteilten Lagern um, wobei die eine Lagerhälfte im Gehäuse der Ausgleichswelleneinheit und die andere als mit der ersten Lagerhälfte verbundener Lagerdeckel ausgebildet ist (Anspruch 7). So kann die Ausgleichswelleneinheit komplett vormontiert und vor dem Einbau auch noch probegelaufen werden. Eine Alternative besteht bei einer gebauten Ausgleichswelle darin, dass sie in ihrem Gehäuse in ungeteilten Lagern umläuft (Anspruch 8). Dann werden Zahnrad und Ausgleichsgewichte beim Einbau der Welle in das Gehäuse gewissermaßen "aufgefädelt".

Eine Verfeinerung der Erfindung besteht darin, dass das Zahnrad der Ausgleichswelle in deren Mitte angeordnet ist (Anspruch 9). Entsprechend ist dann auch das auf der Kurbelwelle sitzende Zahnrad in der Mitte. Bei mittigem Antrieb ist die Torsionseigenfrequenz der Ausgleichswelle höher und die Ausgleichswelleneinheit kann in Längsmitte des Motors, nahe dessen Schwerpunkt, angeordnet sein. Ähnlich günstige Auswirkungen hat die Wahl der Lage der Ausgleichswelleneinheiten so, dass das Zahnrad der Ausgleichswelleneinheit und das Zwischenzahnrad der zweiten Ausgleichswelleneinheit mit dem auf der Kurbelwelle sitzenden Zahnrad an um 180 Grad gegeneinander versetzen Stellen kämmen (Anspruch 10).

Im folgenden wird die Erfindung anhand von Abbildungen einer bevorzugten Ausführungsform der Erfindung beschrieben und erläutert. Es stellen dar:
- Fig. 1:: Eine axonometrische Ansicht der Verbrennungskraftmaschine von links hinten oben,
- Fig. 2:: wie Fig. 1, von rechts hinten unten,
- Fig. 3:: eine Ansicht von vorne,
- Fig. 4:: eine Ansicht von hinten,
- Fig. 5:: einen Schnitt nach EE in Fig. 2,
- Fig. 6:: Schnitt nach AA in Fig. 5,
- Fig. 7:: Detail B in Fig. 5,
- Fig. 8:: Schnitt nach CC in Fig. 7,
- Fig. 9:: Variante zu Fig. 6.

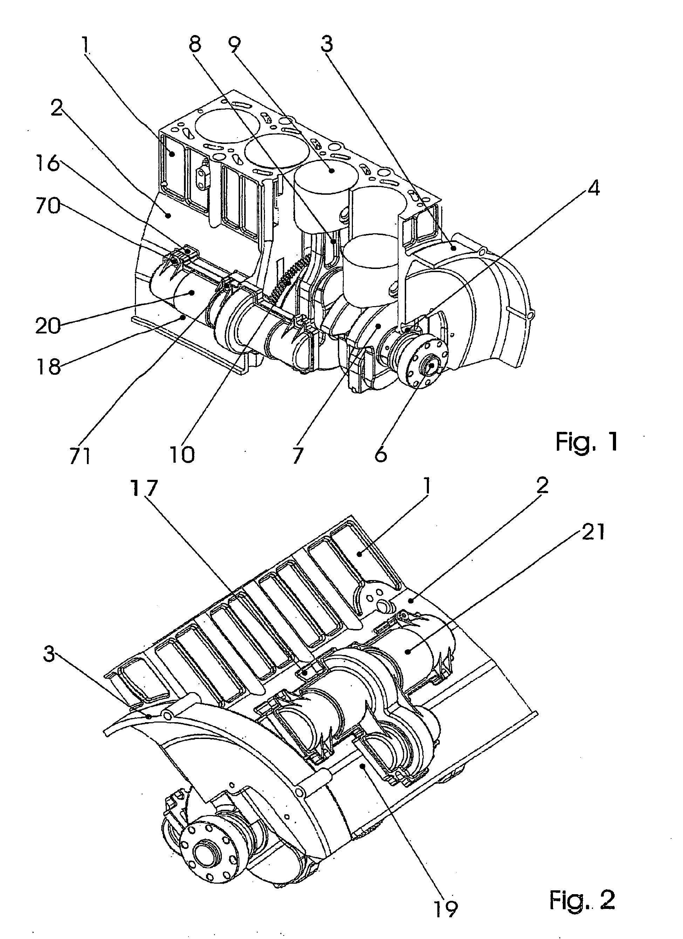

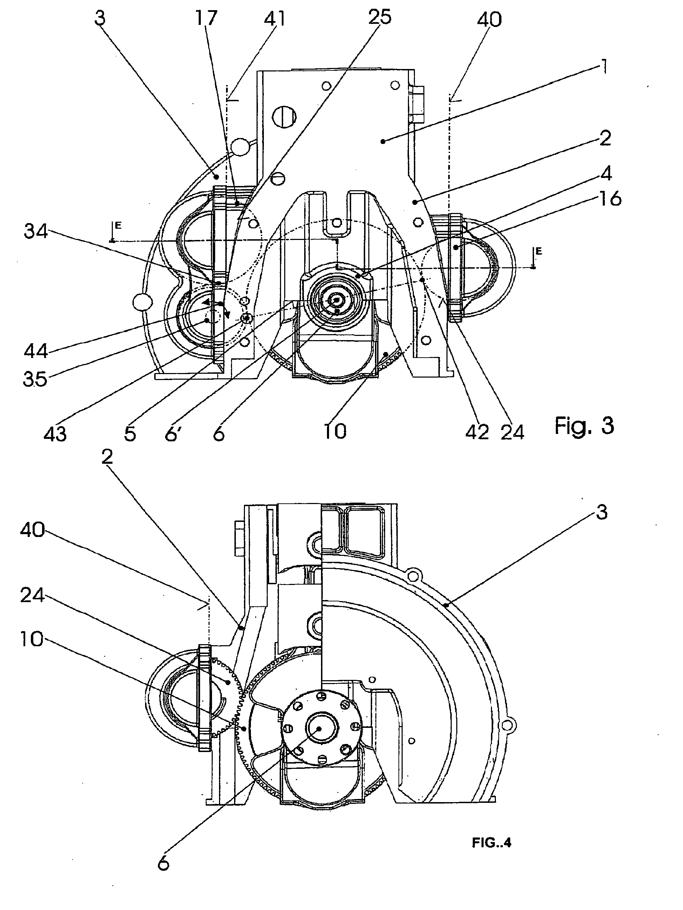

In den **Fig. 1 bis 4** ist eine vierzylindrige Verbrennungskraftmaschine in verschiedenen Ansichten gezeigt. In allen ist der Zylinderblock mit 1, das Kurbelgehäuse summarisch mit 2 und das Schwungradgehäuse mit 3 bezeichnet, obwohl diese hier einstückig ausgeführt sind. Im Kurbelgehäuse 2 sind fünf Kurbelwellenlager 4 vorgesehen, derer über einer Teilungsebene 5 gelegene Lagerhälften im Kurbelgehäuse 2 sind. In diesen ist eine Kurbelwelle 6 (deren Mittenachse ist in Fig. 3 mit 6' bezeichnet) gelagert, zwischen derer Kurbelwangen 7 anderen Endes mit Kolben 9 verbundene Pleuelstangen 8 sind. Zwischen einem der Kurbelwellenlager 4 und einer Kurbelwange 7 ist ein Zahnrad 10 drehfest angeordnet, welches dem Antrieb der Ausgleichswellen dient.

An dem Kurbelgehäuse 2 ist von hinten (vom Schwungradgehäuse 3 her) betrachtet links ein Flansch 16 und rechts ein Flansch 17 angegossen, an welchen links eine Ausgleichswelleneinheit 18 und rechts eine Ausgleichswelleneinheit 19 angeschraubt sind (Schrauben 70 in Fig. 1).

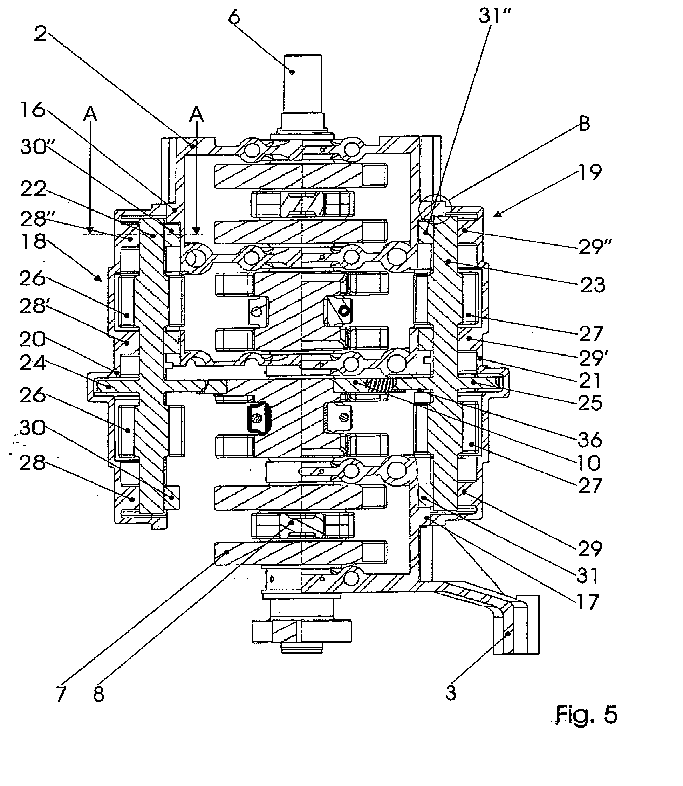

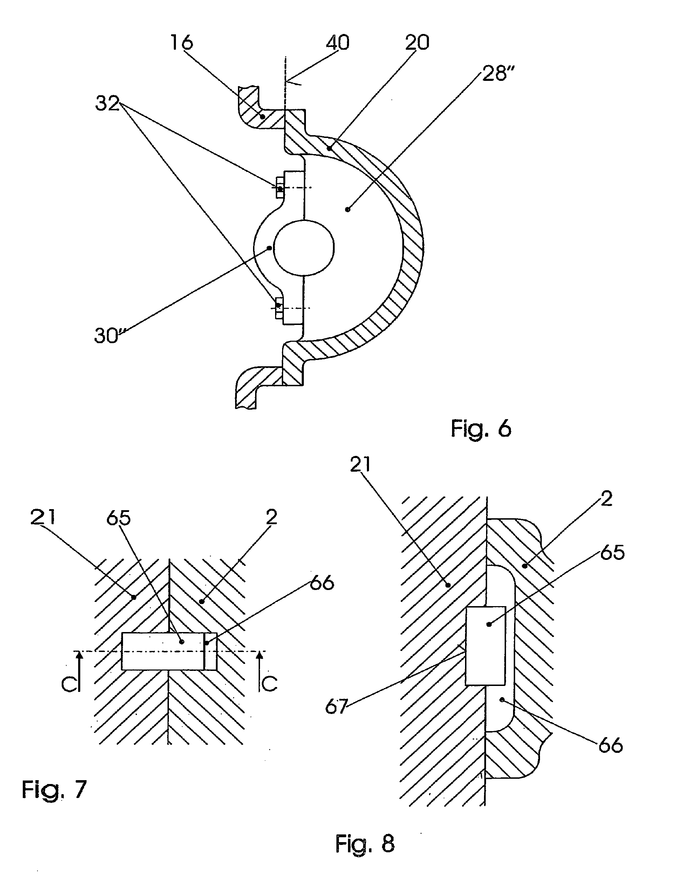

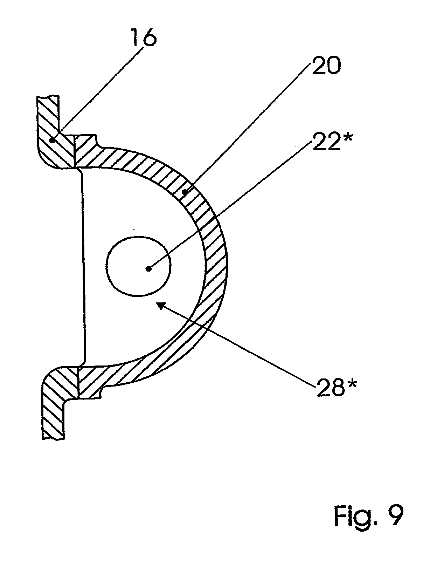

In **Fig. 5** sind die beiden Ausgleichswelleneinheiten 18, 19 genauer in einem horizontalen Schnitt dargestellt. Die linke Ausgleichswelleneinheit 18 besteht im wesentlichen aus einem Gehäuse 20 und einer darin gelagerten Ausgleichswelle 22. Auf dieser sind zwei Ausgleichsgewichte 26 und dazwischen ist ein Zahnrad 24 drehfest angebracht oder einstückig mit der Ausgleichswelle 22 ausgeführt. Die Ausgleichswelle 22 ist in dem Gehäuse 20 dreifach gelagert, wobei die gehäusefesten Lagerhälften mit 28, 28' und 28" bezeichnet sind und Lagerdeckel 30 auf die gehäusefeste Lagerhälfte mittels Lagerschrauben 32 aufgeschraubt sind **(****Fig. 6****).** Alternativ können die Lager als geschlossene Lager 28* ausgeführt sein, wenn die Ausgleichswelleneinheit mehrteilig ist und Ausgleichsgewichte und Zahnrad beim Einschieben der Ausgleichswelle (22*) "aufgefädelt" werden können **(****Fig. 9****).**

Die rechte Ausgleichswelleneinheit 19 besteht im wesentlichen aus einem Gehäuse 21 und einer darin gelagerten Ausgleichswelle 23. Auf dieser sind zwei Ausgleichsgewichte 27 und dazwischen ist ein Zahnrad 25 drehfest angebracht beziehungsweise einstückig mit der Ausgleichswelle 23. Die Ausgleichswelle 23 ist in dem Gehäuse 21 dreifach gelagert, wobei die gehäusefesten Lagerhälften mit 29, 29' und 29" bezeichnet sind und Lagerdeckel 31 auf die gehäusefeste Lagerhälfte aufgeschraubt sind. Die Zahnräder 24, 25 und 34 ragen durch Fenster 36 in das Innere des Kurbelgehäuses 2 hinein, wo sie mit dem kurbelwellenfesten Zahnrad 20 kämmen. Diese Fenster lassen sich auch so klein ausführen, dass die Zahnräder gerade hindurchragen können, so wird die Struktur des Kurbelgehäuses 2 praktisch nicht geschwächt.

In **Fig. 3** sind die Zahnräder 24, 25 auf den Ausgleichswellen 22, 23 mit ihren Teilkreisen dargestellt. Das linke Zahnrad 24 kämmt direkt mit dem kurbelwellenfesten Zahnrad 10. Das rechte Zahnrad 25 kämmt mit einem Zwischenzahnrad 34 auf einer Zwischenwelle 35, und dieses mit dem kurbelwellenfesten Zahnrad 10. Dabei sind die Eingriffspunkte 42, 43 mit dem kurbelwellenfesten Zahnrad 10 angedeutet. Deren Verbindungslinie läuft ungefähr durch die Achse 6' der Kurbelwelle 6; die Eingriffspunkte 42, 43 liegen einander also gegenüber, das heißt in einem Zentriwinkel von ungefähr 180 Graden. Zur genauen Einstellung der Eingriffsverhältnisse in diesen Eingriffspunkten 42, 43 sind die Ausgleichswelleneinheiten in hier vertikaler Richtung auf den Flanschen 16, 17 des Kurbelgehäuses 2 verschiebbar. Die Gehäuse 20, 21 der Ausgleichswelleneinheiten 18, 19 sind dazu auf den ebenen Trennflächen 40, 41 in diesen Trennflächen verschiebbar.

Wenn die Eingriffsverhältnisse so mit der erwünschten Genauigkeit eingestellt sind, werden die Gehäuse 20, 21 mittels Schrauben 70 (Fig.1) am Kurbelgehäuse 2 festgezogen. Um das unabhängig von der genauen Lage der Gehäuse 20, 21 tun zu können, sind die für den Durchtritt der Schrauben 70 an den Gehäusen 20, 21 vorgesehenen Durchtritte als Langlöcher 71 ausgebildet.

**Fig. 7** und **Fig. 8** zeigen eine konstruktive Maßnahme, die das Einstellen der Eingriffsverhältnisse erleichtert. Sie stellt sicher, dass die Gehäuse 20, 21 nur in einer bestimmten Richtung, die in der Normalebene durch die Kurbelwellenachse liegt, verschoben werden können. Dazu ist im Kurbelgehäuse 2 eine Nut 66 für eine Passfeder 65 vorgesehen, welche letztere in einer Ausnehmung 67 des Gehäuses 21 der Ausgleichswelleneinheit eingesenkt ist. In Umkehrung könnte die Nut 66 ebensogut im Gehäuse 21 vorgesehen sein. Derartige Führungen sind vorzugsweise an beiden Stirnwänden der Gehäuse 20, 21 vorgesehen.

## Patentansprüche

1. Kolbenmaschine mit mindestens einer Ausgleichswelleneinheit, in deren Kurbelgehäuse eine Kurbelwelle gelagert ist, und an deren Kurbelgehäuse (2) ein von einem Flansch (16;16,17) umgebenes Fenster (36) vorgesehen ist, wobei der Flansch eine Trennfläche bildet, an der das Gehäuse (20; 20,21) der Ausgleichswelleneinheit (18;18,19) mittels Schrauben (70) befestigt ist, und in welchem Gehäuse eine Ausgleichswelle gelagert ist,
**dadurch gekennzeichnet,**
a) **dass** die Ausgleichswelle (22;22,23) ein durch das Fenster (36) ins Innere des Kurbelgehäuses (2) ragendes Zahnrad (24;24,25) besitzt, welches von einem auf der Kurbelwelle (6) sitzenden Zahnrad (10) angetrieben ist,
b) **dass** das Gehäuse (20; 20,21) der Ausgleichswelleneinheit (18; 18,19) eine Trennfläche (40; 40,41) hat, die zur Einstellung des Verzahnungsspieles auf der Trennfläche (40; 40,41) des Kurbelgehäuses (2) verschiebbar ist, bevor die Schrauben (70) festgezogen werden.

2. Kolbenmaschine nach Anspruch 1, **dadurch gekennzeichnet, dass** eine zweite Ausgleichswelleneinheit (19) vorgesehen ist, in deren Gehäuse (21) zusätzlich zu der zweiten Ausgleichswelle (23) noch eine Zwischenwelle (35) mit einem Zwischenzahnrad (34) gelagert ist, welches einerseits mit dem Zahnrad (25) der Ausgleichswelle (23) und andererseits mit dem auf der Kurbelwelle (6) sitzenden Zahnrad (10) kämmt.

3. Kolbenmaschine nach Anspruch 1, **dadurch gekennzeichnet, dass** in einem normal zur Kurbelwellenachse (6') gedachten Schnitt die Trennfläche (40; 40,41) mit der Verbindungsgeraden der Achsen von Kurbelwelle und Ausgleichswelle einen stumpfen Winkel (44) einschließt.

4. Kolbenmaschine nach Anspruch 3, **dadurch gekennzeichnet, dass** die Trennflächen (40; 40,41) parallel zur Symmetrieebene der Maschine sind.

5. Kolbenmaschine nach Anspruch 1, **dadurch gekennzeichnet, dass** in den Trennflächen (40; 40,41) des Kurbelgehäuses (2) und des Gehäuses (20; 20,21) der Ausgleichswelleneinheit (18; 18,19) mindestens eine Schiebeführung (65,66, 67) vorgesehen ist, die eine Verschiebung in einer zur Kurbelwelle (6) normalen Ebene erlaubt.

6. Kolbenmaschine nach Anspruch 1, **dadurch gekennzeichnet, dass** die Schiebeführung (65,66,67) aus einer geraden Nut (66) in Schieberichtung in der Trennfläche (40; 40,41) und aus einer in der Trennfläche eingelassenen Passfeder (65) besteht.

7. Kolbenmaschine nach Anspruch 1, **dadurch gekennzeichnet, dass** die Ausgleichswelle (22; 22,23) in ihrem Gehäuse (20; 20,21) in geteilten Lagern umläuft, wobei die eine Lagerhälfte (28; 28,29) im Gehäuse (20; 20,21) der Ausgleichswelleneinheit (18; 18,19) und die andere als mit der ersten Lagerhälfte (28; 28,29) verbundener Lagerdeckel (30) ausgebildet ist.

8. Kolbenmaschine nach Anspruch 1, **dadurch gekennzeichnet, dass** die Ausgleichswelle (22; 22,23) in ihrem Gehäuse (20; 20,21) in ungeteilten Lagern (28*) umläuft.

9. Kolbenmaschine nach Anspruch 1, **dadurch gekennzeichnet, dass** das Zahnrad (24; 24,25) der Ausgleichswelle in deren Mitte angeordnet ist.

10. Kolbenmaschine nach Anspruch 2, **dadurch gekennzeichnet, dass** das Zahnrad (24) der ersten Ausgleichswelleneinheit (18) und das Zwischenzahnrad (34) der zweiten Ausgleichswelleneinheit (19) mit dem auf der Kurbelwelle (6) sitzenden Zahnrad (10) an um 180 Grad gegeneinander versetzen Stellen (42,43) kämmen.

11. Kolbenmaschine nach Anspruch 1, **dadurch gekennzeichnet, dass** das Fenster (36) an dem Kurbelgehäuse (2) seitlich vorgesehen ist.
